(19) Europäisches Patentamt
European Patent Office
Office européen des brevets

(11) **EP 2 046 680 B1**

(12) **EUROPEAN PATENT SPECIFICATION**

(45) Date of publication and mention of the grant of the patent:
**03.04.2013 Bulletin 2013/14**

(21) Application number: **07789562.1**

(22) Date of filing: **26.07.2007**

(51) Int Cl.:
***C01B 3/38*** *(2006.01)* ***H01M 8/06*** *(2006.01)*
***H01M 8/04*** *(2006.01)*

(86) International application number:
**PCT/IB2007/002131**

(87) International publication number:
**WO 2008/012658 (31.01.2008 Gazette 2008/05)**

(54) **Reforming system, fuel cell system, reforming method and method for operating fuel cell**

Reformierungssystem, Brennstoffzellensystem, Reformierungsverfahren und Verfahren zum Betrieb einer Brennstoffzelle

Système de reformage, système de pile à combustible, procédé de reformage et procédé de fonctionnement d’une pile à combustible

(84) Designated Contracting States:
**DE**

(30) Priority: **28.07.2006 JP 2006206024**

(43) Date of publication of application:
**15.04.2009 Bulletin 2009/16**

(73) Proprietor: **TOYOTA JIDOSHA KABUSHIKI KAISHA**
**Toyota-shi,**
**Aichi-ken, 471-8571 (JP)**

(72) Inventor: **MASUI, Takatoshi**
**Toyota-shi, Aichi-ken 471-8571 (JP)**

(74) Representative: **TBK**
**Bavariaring 4-6**
**80336 München (DE)**

(56) References cited:
**EP-A- 1 273 552**
**WO-A-2005/081350**
**US-A1- 2005 081 445**
**US-A1- 2006 000 142**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND OF THE INVENTION

1. Field of the Invention

The present invention relates to a system for mixing at least two reforming raw materials including a reforming fuel and causing reforming reactions to generate hydrogen and a method therefor.

2. Description of the Related Art

A system in which a steam-reforming reaction (endothermic reaction) and a partial oxidation reaction (exothermic reaction) of reforming raw materials are carried out to generate hydrogen (which is hereinafter referred to also as "reforming system") is conventionally known (see Japanese Patent Application Publication No. 2005-235583, for example). The reforming raw materials are herein divided into reforming fuels (for example, alcohols such as methanol, hydrocarbons such as gasoline, aldehydes, and the like.) and reforming raw materials other than the reforming fuels (such as water (water vapor) and oxygen, which are hereinafter referred to also as "other reforming raw materials"). Such a reforming system has, for example, a mixing section for mixing a reforming fuel with other reforming raw materials, a reforming section for primarily performing a steam-reforming reaction or a partial oxidation reaction using a reforming catalyst to generate hydrogen, a pump for supplying the other reforming raw materials to the mixing section, and so on.

To the mixing section, the reforming fuel is supplied in the form of atomized droplets and the other reforming raw materials are supplied in the form of high-temperature gas. In this case, the other reforming raw materials are referred to also as "other reforming raw material gas." In this mixing section, the reforming fuel is converted into finer particles and evaporated into reforming fuel gas by the stream of the other reforming raw material gas (by being entrained into the other reforming raw material gas, for example), and mixed with the other reforming raw material gas into a mixed gas. In this case, the degree of atomization and evaporation of the reforming fuel, or the degree of mixing of the reforming fuel gas and the other reforming raw material gas is dependent on the quantity of the other reforming raw material gas supplied.

In the above reforming system, a suction-compression-delivery type pump (which is hereinafter referred to also as "suction-compression-delivery pump") is often used as the pump.

However, when a suction-compression-delivery pump is used in the above reforming system, the suction-compression-delivery pump may generate pulsation when rotating at a low speed, for example. In this case, the quantity of the other reforming raw material gas to be supplied to the mixing section may be varied because of the pulsation. When the supply of the other reforming raw material gas is varied and the quantity of the other reforming raw material gas supplied to the mixing section is insufficient, atomization and evaporation of the reforming fuel or the mixing of the reforming fuel gas with the other reforming raw material gas in the mixing section may be hindered since the velocity of the other reforming raw material gas cannot be sufficiently high to entrain the reforming fuel. Then, the preforming fuel is not evaporated sufficiently and the reforming fuel gas concentration in the mixed gas may decrease. Also, the reforming fuel gas and the other reforming raw material gas cannot be sufficiently mixed and the reforming fuel gas and the other reforming raw material gas may exist separately in the mixed gas. When the mixed gas in such a state reaches the reforming catalyst in the reforming section, the steam-reforming reaction or partial oxidation reaction is decelerated and, consequently, the reforming efficiency may decrease.

The present invention provides an art for preventing a decrease of the reforming fuel gas concentration in the mixed gas or preventing insufficient mixing of the reforming fuel gas and the other reforming raw material gas in the mixed gas to improve the reforming efficiency in a system for generating hydrogen from reforming raw materials.

SUMMARY OF THE INVENTION

For the purpose of accomplishing at least part of the above object, a first aspect of the present invention provides a reforming method as defined in claim 1, a second aspect provides a reforming system as defined in claim 2, and a third aspect provides a reforming system as defined in claim 7.

According to the reforming method and the reforming systems of the present invention, a shortage of the supply of the other reforming raw material gas relative to the supply of reforming fuel in the mixing section can be prevented. As a result, in the mixing section, a decrease in concentration of reforming fuel gas in the mixed gas can be prevented, or insufficient mixing of the reforming fuel gas and the reforming raw material gas other than the reforming fuel in the mixed gas can be prevented, and, consequently, the reforming efficiency is improved.

When the pump is rotating at a high speed, the influence of pulsation of the pump on the supply quantity of the reforming material is relatively small. Therefore, since the valve control section opens the shut off valve in synchronization with the periodic fluctuation only when the influence of pulsation of the pump is large, the load on the valve control section can be decreased.

According to the reforming system of the second aspect of the present invention, the valve control section may open the shut off valve a prescribed time period to the time when the supply quantity of the reforming raw material reaches a peak value.

In this case, insufficient mixing of the reforming fuel gas and the reforming raw material gas in the mixed gas can be prevented, and, consequently, the reforming efficiency is improved.

The valve control section may determine a valve open period of the shut off valve based on the quantity of reforming fuel to be supplied to the mixing section per unit time, open the shut off valve such that the opening cycle of the shut off valve is equal to an integral multiple of the cycle of the periodic fluctuation in the supply quantity of the reforming raw material, and close the shut off valve when the determined valve open period elapses.

When the fuel supply valve is closed within a prescribed time period after the start of opening, the reforming fuel supply quantity may be unstable (the period from the start of opening of the fuel supply valve to the closure thereof in this case, that is, the above prescribed time period is hereinafter referred to also as "unstable period"). **In** the above configuration, the valve open period of the shut off valve is determined based on the quantity of the reforming fuel to be supplied to the mixing section per unit time. In this case, as the opening cycle of the shut off valve is longer relative to the cycle of fluctuation in the supply quantity of the reforming raw material, the number of times the shut off valve opens decreases. Then, the quantity of reforming fuel to be supplied upon each opening of the shut off valve increases, that is, the valve open period of the shut off valve increases. Therefore, in the above case, as the integer is larger, the valve open period of the shut off valve will be longer and the shut off valve can be prevented from being closed during the unstable period. As a result, the supply of reforming fuel to the mixing section is prevented from becoming unstable.

The reforming system may further include a fuel cell, the pump may supply an oxidation gas containing oxygen to the fuel cell, and the reforming raw material supply flow path may direct oxidation waste gas, which is generated as a result of an electrochemical reaction of the oxidation gas supplied by the pump in the fuel cell and contains oxygen and water vapor, to the mixing section as the reforming raw material.

In this case, because the oxidation waste gas discharged from the fuel cell is used as the reforming raw material, the number of parts can be decreased and the cost can be reduced.

The reforming system may further include a fuel cell; and a fuel gas supply flow path through which the hydrogen generated in the reforming section to the fuel cell.

In this case, the hydrogen generated in the reforming section can be used as a fuel gas for the fuel cell.

According to the reforming system of the third aspect of the present invention, the reforming fuel is supplied to the mixing section in synchronization with periodic fluctuation in the supply quantity of the oxidation waste gas. Therefore, a shortage of the supply of the oxidation waste gas relative to the supply of reforming fuel in the mixing section can be prevented. As a result, in the mixing section, a decrease in concentration of reforming fuel gas in the mixed gas can be prevented, or insufficient mixing of the reforming fuel gas and the oxidation waste gas in the mixed gas can be prevented, and, consequently, the reforming efficiency is improved.

When the load required to the fuel cell is small, the quantity of the oxidation gas (fuel gas) to be supplied to the fuel cell is also smalL In this case, the pump is driven at a low rotational speed. The pump is less likely to generate pulsation when rotating at a high rotational speed. Thus, the influence of pulsation of the pump on the supply quantity of the oxidation gas is small. Therefore, in the above case, since the valve control section opens the fuel supply shut off valve in synchronization with the periodic fluctuation in the supply quantity of the oxidation waste gas only when the influence of pulsation of the pump is large, the load on the valve control section can be decreased.

The reforming systems of the second and third aspects of the present invention may further include: a heating section that heats the reforming section; a fuel waste gas supply flow path through which fuel waste gas generated in the fuel cell as a result of an electrochemical reaction of the fuel gas supplied from the reforming section and discharged from the fuel cell to the heating section; and an oxygen supplying section that supplies oxygen to the heating section. The heating section may burn the fuel waste gas and the oxygen supplied by the oxygen supplying section and uses the combustion heat to heat the reforming section.

In this case, emission of combustion waste gas discharged from the fuel cell to the outside of the fuel cell system can be reduced and the combustion waste gas is effectively used to heat the reforming section.

The present invention can be implemented in various forms such as a computer program for establishing the method or reforming system, a recording medium in which the computer program is recorded, and a data signal including the computer program and embodied in a carrier wave.

When the present invention is implemented as a computer program or a recording medium in which the computer program is recorded, the computer program may be constituted as a program for controlling the operation of the entire reforming system or a program for fulfilling only the functions of the present invention.

BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:

FIG 1 is a block diagram illustrating the general configuration of a reforming system according to a first embodiment of the present invention.

FIG 2 is a graph showing the relation between the valve open period of a fuel supply valve and the quantity of reforming fuel supplied.

FIG. 3 is a flowchart of a reforming process which the reforming system of the first embodiment performs.

FIG. 4 is view illustrating the fluctuations in the oxidation waste gas flow rate which occurs when the cathode pump is driven at a low rotational speed.

FIG 5 is a flowchart of a reforming process which the reforming system of a second embodiment performs.

FIG 6 is a graph showing the relation between the cycle of fluctuations in the oxidation waste gas flow rate and the times when the fuel supply valve is opened and closed in the reforming system of the second embodiment.

FIG. 7 is a block diagram illustrating the general configuration of a reforming system according to a first modification.

FIG. 8 is a block diagram illustrating the general configuration of a reforming system according to a second modification.

DETAILED DESCRIPTION OF THE EXEMPLE EMBODIMENTS

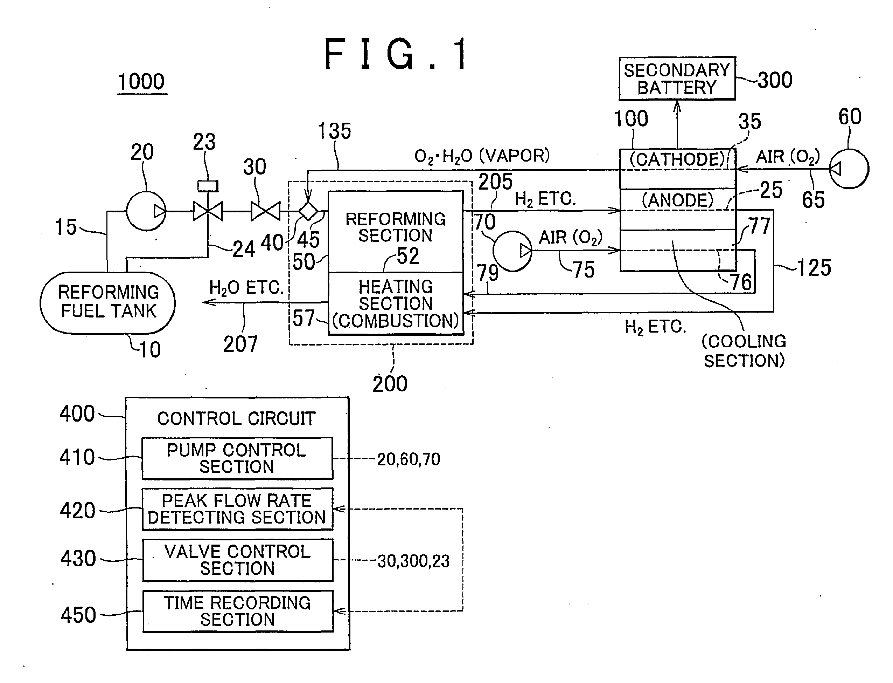

FIG. 1 is a block diagram illustrating the general configuration of a reforming system 1000 as a first embodiment of the present invention. The reforming system 1000 is a fuel cell system, and essentially has a reforming fuel tank 10, a fuel pump 20, a variable regulator 23, a fuel supply valve 30, a cathode pump 60, a cooling pump 70, a fuel cell 100, a reformer 200, a secondary battery 300, and a control circuit 400. The reforming system 1000 performs a reforming process of reforming a reforming fuel to generate hydrogen and uses the hydrogen as a fuel gas to generate electricity in the fuel cell 100.

The fuel cell 100 is a polymer electrolyte fuel cell and has a stack structure in which a plurality of unit cells (which are hereinafter referred to simply as cells) are stacked on top of each other. Each of the cells has an anode, a cathode, and an electrolyte membrane (not shown) interposed therebetween. In the fuel cell 100, a fuel gas containing hydrogen and an oxidation gas containing oxygen are supplied to the anode and the cathode, respectively, of each of the cells to cause an electrochemical reaction which produces an electromotive force. The fuel cell 100 supplies the generated electric power to a prescribed load (a motor or storage battery, for example) connected to the fuel cell 100. As the fuel cell 100, various types of fuel cells, such as a hydrogen separation membrane fuel cell, an alkali aqueous solution electrolyte fuel cell, a phosphoric acid electrolyte fuel cell, and a molten carbonate electrolyte fuel cell, can be used instead of the above-mentioned polymer electrolyte fuel cell. In the following, a flow path through which the fuel gas is supplied to the anodes and a flow path through which the oxidation gas is supplied to the cathodes in the fuel cell 100 are referred to as "anode flow path 25" and "cathode flow path 35," respectively. The fuel cell 100 has a cooling section 77 for cooling the cells. The cooling section 77 has a flow path 76 through which air flows and cools the cells with the air.

The cathode flow path 35 in the fuel cell 100 is connected to an oxidation gas supply flow path 65 and an oxidation waste gas discharge flow path 135. The oxidation gas supply flow path 65 is also connected to a cathode pump 60, and the oxidation waste gas discharge flow path 135 is also connected to a reformer 200 (a mixing section 40, which is described later).

The anode flow path 25 in the fuel cell 100 is connected to a fuel gas supply flow path 205 and a fuel waste gas discharge flow path 125. The fuel gas supply flow path 205 is also connected to the reformer 200 (a reforming section 50, which is described later), and the fuel waste gas discharge flow path 125 is also connected to the reformer 200 (a heating section 57, which is described later).

In addition, the cooling section 77 in the fuel cell 100 is connected to an air supply flow path 75 and an air discharge flow path 79. The air supply flow path 75 is also connected to the cooling pump 70, and the air discharge flow path 79 is also connected to the reformer 200 (the heating section 57).

The cathode pump 60 is a suction-compression-delivery pump which sucks and compresses atmospheric air (oxygen), and delivers the compressed air into the oxidation gas supply flow path 65 to supply it to the cathodes (cathode flow path 35) of the fuel cell 100 as an oxidation gas. Since the air (oxidation gas) discharged from the cathode pump 60 is delivered through the mixing section 40, the reforming section 50, the fuel cell 100 (the anode flow path 25), the heating section 57 and so on by the power of the cathode pump 60 as described later, the cathode pump 60 has a large output (can supply a large quantity of oxidation gas) per rotation. Thus, the cathode pump 60 may generate large pulsation especially when rotating at a low speed.

The oxidation gas supplied by the cathode pump 60 is subjected to an electrochemical reaction at the cathodes of the fuel cell 100, and the resulting oxidation waste gas is discharged into the oxidation waste gas discharge flow path 135. The oxidation waste gas discharged into the oxidation waste gas discharge flow path 135 is introduced into the reformer 200 (the mixing section 40, which is described later). At the cathodes of the fuel cell 100, water is generated by the electrochemical reaction. Thus, the oxidation waste gas introduced from the fuel cell 100 (cathodes) through the oxidation waste gas discharge flow path 135 into the mixing section 40 contains oxygen which was not consumed in the electrochemical reaction and water generated by the electrochemical reaction. Since the oxidation waste gas has a high temperature, most of the water in the oxidation waste gas exists in the form of water vapor. The oxygen and water vapor in the oxidation waste gas are used as reforming raw materials (which may be hereinafter referred to as "other reforming raw materials" to distinguish them from the reforming fuel) in the reformer 200 (the reforming section 50). The flow rate of the oxidation waste gas discharged from the fuel cell 100 (the flow rate of the oxidation waste gas to be supplied to the mixing section 40) is hereinafter referred to also as "oxidation waste gas flow rate Qa."

The secondary battery 300 is a storage battery for storing the electricity generated in the fuel cell 100. The reforming fuel tank 10 is a storage section for storing a reforming fuel, and is connected to the reformer 200 (the mixing section 40, which is described later) via a fuel supply flow path 15. Examples of the reforming fuel to be stored in the reforming fuel tank 10 include hydrocarbons (gasoline, kerosene, natural gas, etc.), alcohols (ethanol, methanol, etc.) and aldehydes, and the reforming fuel is usually stored in the form of liquid.

The fuel pump 20 is disposed in the fuel supply flow path 15, and supplies the reforming fuel stored in the reforming fuel tank 10 to the reformer 200 (the mixing section 40). The fuel pump 20 is driven by the control circuit 400, which is described later, and operates stably at a predetermined constant rotational speed Rt.

The variable regulator 23 is located in the fuel supply flow path 15 downstream of the fuel pump 20 in the direction in which the reforming fuel is supplied, and variably controls the pressure of the reforming fuel flowing through the fuel supply flow path 15. The variable regulator 23 is controlled by the control circuit 400, which is described later, and controls the pressure of the reforming fuel to a pressure value set by the control circuit 400 (which is hereinafter referred to as "target pressure value Pf" as, for example, target pressure value Pf: 200kPa). To the variable regulator 23 is connected a relief flow path 24 having one end connected to the reforming fuel tank 10. If excessive reforming fuel is generated when the variable regulator 23 is controlling the pressure of the reforming fuel to a target pressure value Pf, it is returned to the reforming fuel tank 10 through the relief flow path 24.

The fuel supply valve 30 is located in the fuel supply flow path 15 downstream of the variable regulator 23 in the direction in which the reforming fuel is supplied. The fuel supply valve 30 shuts off the supply of reforming fuel to the reformer 200 (the mixing section 40, which is described later) when closed, and atomizes the reforming fuel supplied from the fuel pump 20, that is, converts the reforming fuel into atomized droplets, and supplies it to the reformer 200 (the mixing section 40) when opened. The quantity of reforming fuel to be supplied to the mixing section 40 per unit time (which is hereinafter referred to as "per-unit-time reforming fuel supply quantity Q) is determined based on the charge state of the secondary battery 300. In the reforming system 1000 of this embodiment, the per-unit-time reforming fuel supply quantity Q is determined by controlling the target pressure value Pf of the variable regulator 23, the number of times the fuel supply valve 30 is opened per unit time, and the valve open period for which the fuel supply valve 30 remains open upon each opening thereof (which is hereinafter referred to as "valve open period Tf").

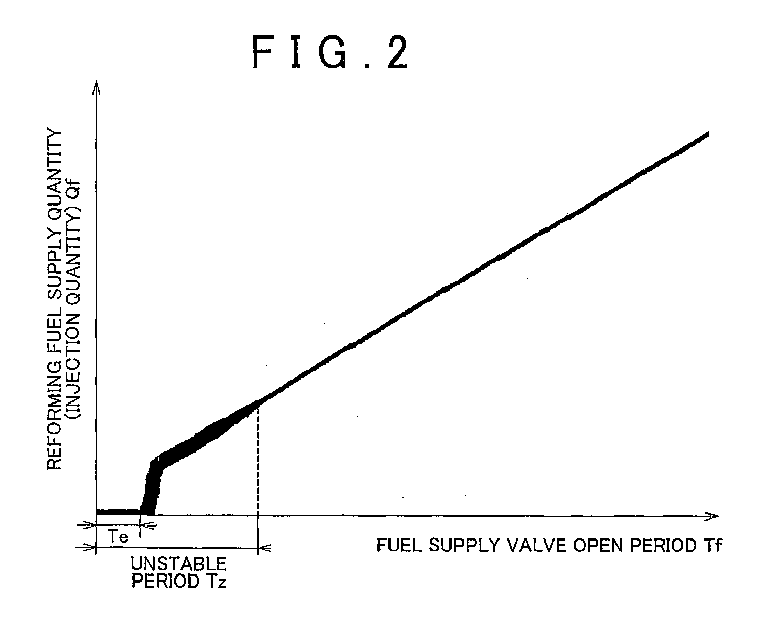

FIG. 2 is a graph showing the relation between the valve open period of a fuel supply valve 30 and the quantity of reforming fuel supplied. The graph shown in FIG 2 shows the relation between the valve open period Tf and the quantity of reforming fuel to be supplied upon each opening of the fuel supply valve 30 (which is hereinafter referred to also as "reforming fuel supply quantity Qf") when the rotational speed of the fuel pump 20 is equal to a prescribed value. As shown in the graph, as the valve open period Tf is longer, the reforming fuel supply quantity Qf is greater. However, when the valve open period Tf is equal to or shorter than a prescribed period Te (see FIG. 2), the reforming fuel supply quantity Qf is zero, that is, no reforming fuel is supplied. When the fuel supply valve 30 is closed within a prescribed time period after the start of opening, the reforming fuel supply quantity Qf may be unstable (the period from the start of opening of the fuel supply valve 30 to the closure thereof in this case, that is, the above prescribed time period is hereinafter referred to also as "unstable period Tz").

The cooling pump 70 supplies atmospheric air to the cooling section 77 as a cooling medium through an air supply flow path 75.

In the cooling section 77 of the fuel cell 100, the air supplied by the cooling pump 70 flows through a cooling flow path 76 in the cooling section 77 and then is discharged into the air discharge flow path 79. The air discharged into the air discharge flow path 79 is introduced into the reformer 200 (the heating section 57, which is described later) as a combustion supporting gas.

The reformer 200 has the mixing section 40, the reforming section 50, and the heating section 57, and generates hydrogen from the other reforming raw materials (water vapor and oxygen) and the reforming fuel.

In the reformer 200, the mixing section 40 and the reforming section 50 are connected to each other via a mixed gas flow path 45. The reforming section 50 and the heating section 57 are arranged side by side with a partition 52 therebetween. The heating section 57 is connected to a water discharge flow path 207.

In the mixing section 40, the reforming fuel atomized by the fuel supply valve 30 and supplied through the fuel supply flow path 15 and the oxidation waste gas (the other reforming raw material gas: oxygen and water vapor) introduced through the oxidation waste gas discharge flow path 135 are mixed. In this case, the high-temperature oxidation waste gas entrains the reforming fuel supplied in the form of atomized droplets (which is hereinafter referred to also as "atomized reforming fuel") while circulating in the mixing section 40, for example. Then, the atomized reforming fuel is converted into finer particles and evaporated into reforming fuel gas, and a mixed gas of the oxidation waste gas (the other reforming raw material gas) and the reforming fuel gas is generated.

The reforming section 50 has a reforming catalyst (not shown) for promoting the reforming reactions. When the mixed gas generated in the mixing section 40 is introduced into the reforming section 50 through the mixed gas flow path 45, the reforming reactions, that is, a steam-reforming reaction and a partial oxidation reaction, are promoted by the reforming catalyst and hydrogen is generated. In this case, since the steam-reforming reaction as an endothermic reaction and the partial oxidation reaction as an exothermic reaction proceed simultaneously, part of heat required by the steam-reforming reaction is supplied from the heat generated through the partial oxidation reaction. The reforming catalyst is suitably determined depending on the reforming fuel used for the reforming reactions.

The hydrogen generated in the reforming section 50 is supplied as a fuel gas to the anode flow path 25 (anodes) of the fuel cell 100 through the fuel gas supply flow path 205.

The fuel gas supplied from the reformer 200 to the fuel cell 100 is subjected to an electrochemical reaction at the anodes and the resulting fuel waste gas is discharged into the fuel waste gas discharge flow path 125. The fuel waste gas discharged into the fuel waste gas discharge flow path 125 contains hydrogen which was not consumed in the electrochemical reaction at the anodes of the fuel cell 100, and is introduced into the heating section 57 of the reformer 200 as a combustible gas.

The heating section 57 has a combustion catalyst for promoting a combustion reaction. When air (combustion supporting gas) and the fuel waste gas (combustible gas) are introduced from the cooling section 77 (cooling flow path 76) and the fuel cell 100, respectively, into the heating section 57, a combustion reaction between oxygen in the air and hydrogen in the fuel waste gas is induced by the combustion catalyst. Combustion heat from the combustion reaction is transmitted to the reforming section 50 through the partition 52, and used for the steam-reforming reaction in the reforming section 50. Water and so on are generated by the combustion reaction and discharged to the outside of the reforming system 1000 through the water discharge flow path 207.

The control circuit 400 is constituted as a logic circuit centered on a microcomputer. More specifically, the control circuit 400 has a CPU (not shown) which executes a prescribed operation and so on according to a preset control program; a ROM (not shown) in which a control program, control data and so on necessary for various processing operations in the CPU are stored in advance; a RAM (not shown) in which various data necessary for the processing operations in the CPU are temporarily stored; an input-output port (not shown) through which various signals are input and output, and so on. The control circuit 400 controls the fuel pump 20, the variable regulator 23, the fuel supply valve 30, the cathode pump 60, the cooling pump 70, the secondary battery 300 and so on, in other words, controls the entire reforming system 1000.

The control circuit 400 also functions as a pump control section 410, a peak flow rate detecting section 420, and a valve control section 430, and carries out a reforming process, which is described later. In addition, the control circuit 400 has a time recording section 450.

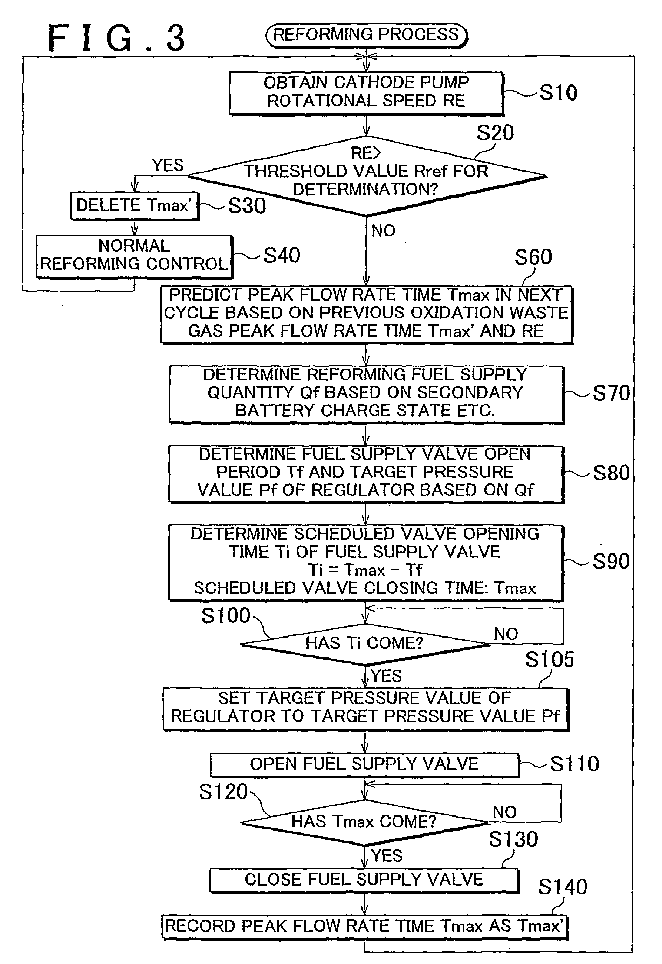

FIG. 3 is a flowchart of a reforming process which the reforming system 1000 of this embodiment performs. The reforming process is started simultaneously with the start of power generation in the fuel cell 100, and performed concurrently with the power generation in the fuel cell 100. At the start of the reforming process, the cathode pump 60, the cooling pump 70, and the fuel pump 20 have been driven, and the fuel supply valve 30 is closed. Especially, the fuel pump 20 is driven at a constant rotational speed Rt. The "time" used in the reforming process may be relative time from a reference point in time or a point in the standard time.

First, the pump control section 410 obtains the rotational speed RE of the cathode pump 60 (step S10).

Then, the pump control section 410 compares the obtained rotational speed RE with a threshold value Rref (step S20).

When the pump control section 410 determines that the rotational speed RE is greater than the threshold value Rref (step S20: YES), the control circuit 400 determines that the cathode pump 60 is driven at a high rotational speed. Then, the control circuit 400 deletes a peak flow rate time Tmax' recorded in the time recording section 450 (step S30). The peak flow rate time Tmax' is recorded in the time recording section 450 by the peak flow rate detecting section 420 in step S140, which is described later. When a peak flow rate time Tmax' is not recorded in the time recording section 450, the control circuit 400 may not perform step S30.

After that, the control circuit 400 carries out a normal reforming control (step S40). More specifically, during the normal reforming control, the control circuit 400 determines a per-unit-time reforming fuel supply quantity Q based on the charge state of the secondary battery 300, and determines a target pressure value Pf of the variable regulator 23 based on the determined per-unit-time reforming fuel supply quantity Q. Then, the control circuit 400 sets the target pressure value of the variable regulator 23 to the determined target pressure value Pf, and opens the fuel supply valve 30 for a time period corresponding to the per-unit-time reforming fuel supply quantity Q.

When the pump control section 410 determines that the rotational speed RE is equal to or lower than the threshold value Rref (step S20: NO), the control circuit 400 determines that the cathode pump 60 is driven at a low rotation speed and carries out the following process.

At this time, when the control circuit 400 is carrying out the above normal reforming control (step S40), the control circuit 400 stops the control and proceeds to the process described below.

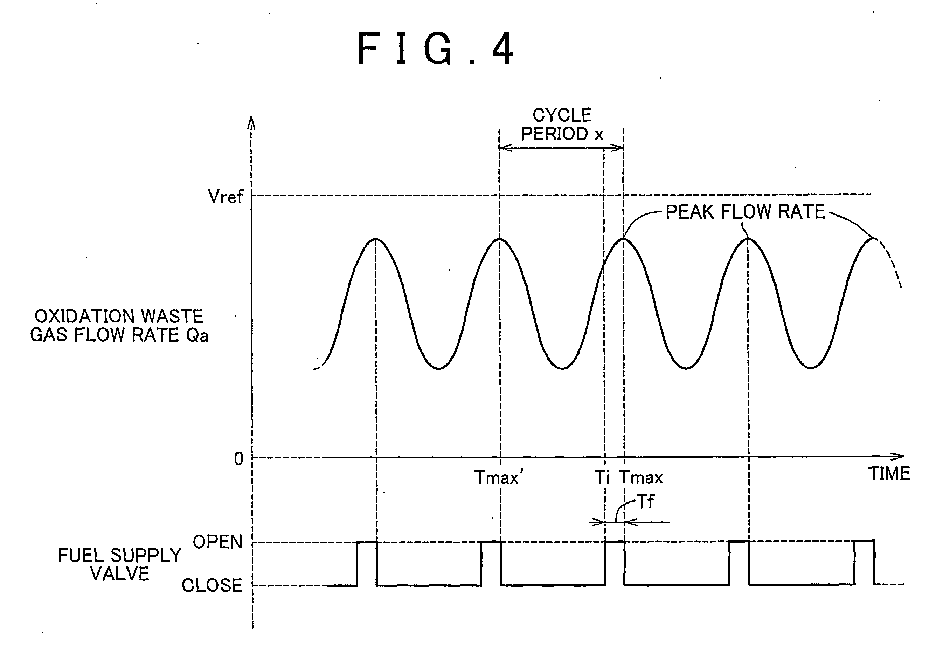

FIG. 4 is view illustrating the fluctuations in the oxidation waste gas flow rate Qa which may occur when the cathode pump 60 is being driven at a low rotational speed. In FIG 4, the times when the fuel supply valve 30 is opened and closed are also shown. When the cathode pump 60 is driven at a low rotational speed, the oxidation waste gas flow rate Qa may fluctuate largely as shown in FIG. 4 by the influence of pulsation of the cathode pump 60. In this case, the oxidation waste gas flow rate Qa periodically changes in synchronization with the pulsation of the cathode pump 60. Therefore, in the reforming system 1000 of this embodiment, the following step S60 to step S140 are performed in each cycle of fluctuations in the oxidation waste gas flow rate Qa (which is hereinafter referred to also simply as "flow rate fluctuations"). In step S140, which is described later, a peak flow rate time Tmax' of the oxidation waste gas is recorded in the time recording section 450 in every cycle of the flow rate fluctuation. The peak flow rate time Tmax' represents the time when the oxidation waste gas flow rate Qa had a peak value during the previous cycle of the flow rate fluctuations. In FIG. 4, the oxidation waste gas flow rate Vref at a time when the rotational speed RE of the cathode pump 60 is equal to Rref is also shown.

The peak flow rate detecting section 420 predicts a peak flow rate time Tmax of the oxidation waste gas in the next cycle (see cycle period x in FIG. 4) based on, for example, the previous peak flow rate time Tmax' of the oxidation waste gas (see cycle period x in FIG. 4) recorded in the time recording section 450 and the rotational speed RE of the cathode pump 60 (step S60). When a peak flow rate time Tmax' is not recorded in the time recording section 450 (at the start of the reforming process or after step S30), a peak flow rate of the cathode pump 60 is detected based on the rotational speed RE and the time of the peak flow rate is used as the peak flow rate time Tmax' to predict the peak flow rate time Tmax in the next cycle.

Then, the valve control section 430 determines a per-unit-time reforming fuel supply quantity Q based on the charge state of the secondary battery 300, and determines the reforming fuel supply quantity Qf for one cycle of fluctuations in the oxidation waste gas flow rate Qa based on the per-unit-time reforming fuel supply quantity Q and the cycle of fluctuations in the oxidation waste gas flow rate Qa (step S70).

Next, the valve control section 430 determines a valve open period Tf of the fuel supply valve 30 and a target pressure value Pf of the variable regulator 23 based on the reforming fuel supply quantity Qf (step S80).

Then, the valve control section 430 determines a scheduled valve opening time Ti (see cycle period x in FIG. 4) according to the equation (1) below (step S90). In this case, the peak flow rate time Tmax is set as a scheduled valve closing time.

$$Ti = Tmax - Tf \quad (1),$$

where, Tmax: peak flow rate time in next cycle, Tf: valve open period.

The valve control section 430 next determines whether the scheduled valve opening time Ti has come (step S100). The valve control section 430 waits when the scheduled valve opening time Ti has not come yet (step S100: NO).

When the valve control section 430 determines that the scheduled valve opening time Ti has come (step S100: YES), the valve control section 430 sets the target pressure value of the variable regulator 23 to the target pressure value Pf (step S105), and opens the fuel supply valve 30 (step S110).

After that, the valve control section 430 waits until the peak flow rate time Tmax (scheduled valve closing time) comes (step S120: NO), and closes the fuel supply valve 30 (step S130) when the scheduled valve closing time comes (step S120: YES).

Then, the peak flow rate detecting section 420 records the predicted peak flow rate time Tmax in the time recording section 450 as a peak flow rate time Tmax' (step S140). In this case, the control circuit 400 may detect an actual peak flow rate time of the oxidation waste gas based on a change in the rotational speed RE of the cathode pump 60 and so on in a routine other than this reforming process and record the detected time as a peak flow rate time Tmax' in the time recording section 450. After that, the control circuit 400 returns to step S10.

As described above, in the reforming system 1000 of this embodiment, a peak flow rate time Tmax is predicted in each cycle of fluctuations in oxidation waste gas flow rate Qa caused by pulsation of the cathode pump 60 and the fuel supply valve 30 is opened in synchronization with the peak flow rate time Tmax (see FIG. 4) during the reforming process (FIG. 3). Then, the oxidation waste gas is supplied to the mixing section 40 of the reformer 200 when (immediately before) the oxidation waste gas flow rate Qa reaches a peak flow rate in each cycle of fluctuations in the oxidation waste gas flow rate Qa. Thus, a shortage of the supply of oxidation waste gas (other reforming raw material gas) relative to the supply of reforming fuel in the mixing section 40 is prevented. As a result, in the mixing section 40, evaporation of reforming fuel is promoted and a decrease in concentration of reforming fuel gas in the mixed gas can be prevented, or mixing of the reforming fuel gas and the oxidation waste gas is promoted and the reforming fuel gas and oxidation waste gas are prevented from existing separately in the mixed gas. Therefore, a steam-reforming reaction or partial oxidation reaction proceeds smoothly at the reforming catalyst of the reforming section 50 and, consequently, the reforming efficiency is improved.

Also, in the above case, since the fuel supply valve 30 is opened to supply the reforming fuel to the mixing section 40 in each cycle of fluctuations in the oxidation waste gas flow rate Qa, the reforming fuel is intermittently supplied to the mixing section 40.

The influence of pulsation of the cathode pump 60 on the oxidation waste gas flow rate Qa is smaller when the cathode pump 60 is rotating at a high rotational speed than when rotating at a low rotational speed. Thus, as described above, the reforming system 1000 of this embodiment performs normal reforming control during the reforming process when the rotational speed RE is greater than a threshold value Rref. Therefore, when the cathode pump 60 is rotating at a high speed, that is, when the influence of pulsation of the cathode pump 60 is relatively small, there is no need to control the fuel supply valve 30 and the load on the control circuit 400 can be reduced.

Also, as described above, in the reforming system 1000 of this embodiment, the reformer 200 uses oxygen and water vapor in the oxidation waste gas discharged from the fuel cell 100 (cathodes) as the reforming raw materials (other reforming raw materials) to produce hydrogen. Thus, the oxidation waste gas can be used effectively and there is no need to prepare additional reforming raw materials and supply them to the reformer 200. Therefore, the number of parts can be decreased and the cost can be reduced. In addition, since the oxidation waste gas has a high temperature, there is no need for heating, which is required when additional reforming raw materials are prepared, the energy efficiency can be improved.

As described above, the reforming system 1000 of this embodiment determines a valve open period Tf based on the reforming fuel supply quantity Qf, and determines the scheduled valve opening time Ti such that the fuel supply valve 30 will close at the peak flow rate time Tmax of the oxidation waste gas based on the valve open period Tf. Then, since the reforming fuel is supplied when the supply of oxidation waste gas is substantially at a peak in the mixing section 40, the reforming efficiency is improved.

As described above, in the reforming system 1000 of this embodiment, the fuel waste gas discharged from the fuel cell 100 is burned in the heating section 57. Therefore, emission of combustion waste gas to the outside of the reforming system 1000 can be reduced and the combustion waste gas is effectively used to heat the reforming section.

The fuel supply valve 30 may correspond to the "fuel supply shut off value" in the claims, the cathode pump 60 may correspond to the pump" in the claims, the oxidation waste gas discharge flow path 135 may correspond to the "reforming raw material supply flow path" or the "oxidation waste gas supply flow path" in claims, the peak flow rate detecting section 420 may correspond to the "fluctuation detecting section" in the claims, the valve control section 430 may correspond to the "valve control section" in the claims, and the fuel gas supply flow path 205 corresponds to the "fuel gas supply flow path" in the claims. The control circuit 400 may correspond to the "controller" in the claims.

A reforming system 1000A of a second embodiment has the generally same configuration as the reforming system 1000 of the first embodiment and therefore its detailed description is not repeated. The reforming system 1000A of this embodiment, however, performs a reforming process different from that the reforming system 1000 of the first embodiment does.

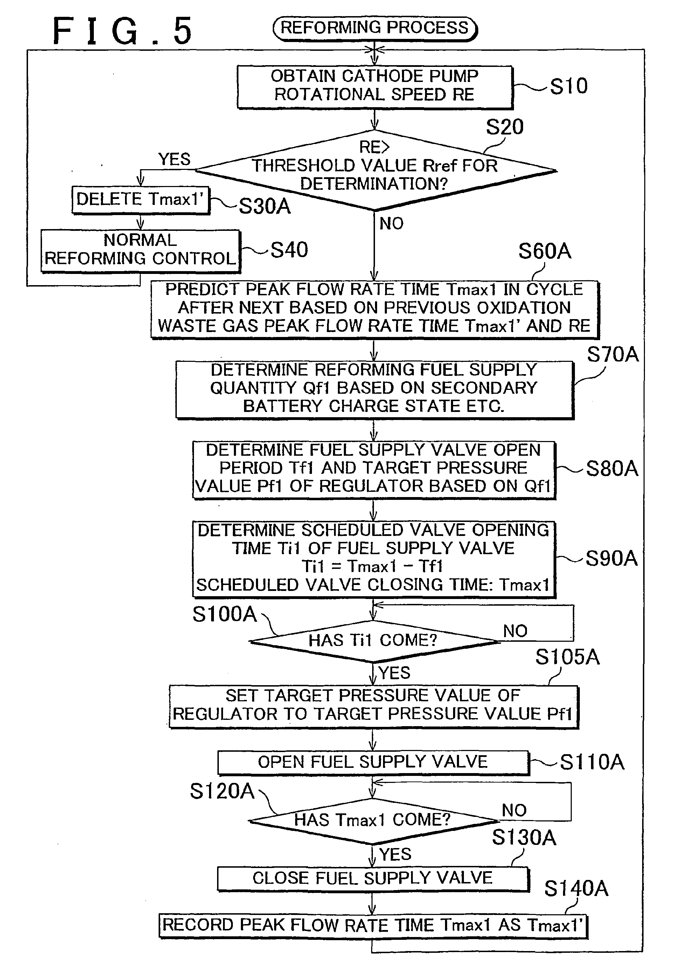

FIG. 5 is a flowchart of a reforming process which the reforming system 1000A of this embodiment performs. The reforming process is started simultaneously with the start of power generation in the fuel cell 100 and performed concurrently with the power generation in the fuel cell 100 just as the reforming process which the reforming system 1000 of the first embodiment performs. At the start of the reforming process, the cathode pump 60, the cooling pump 70, and the fuel pump 20 have been driven, and the fuel supply valve 30 is closed. The fuel pump 20 is driven at a constant rotational speed Rt. The same steps as those in the reforming process which the reforming system 1000 performs are designated by the same step number and the details thereof are not repeated.

In the reforming process which the reforming system 1000A of this embodiment performs, when the pump control section 410 determines that the rotational speed RE is equal to or lower than the threshold value Rref (step S20: NO), the control circuit 400 determines that the cathode pump 60 is driven at a low rotation speed and carries out the following process. At this time, if the control circuit 400 is carrying out the normal reforming control (step S40), the control circuit 400 stops the control and proceeds to the process described below.

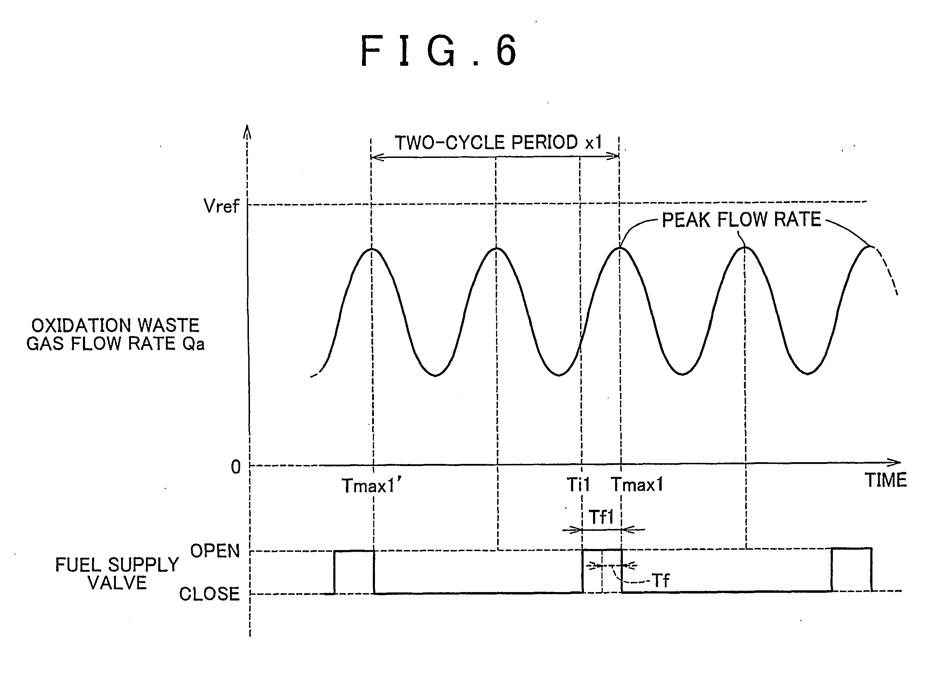

FIG. 6 is a graph showing the relation between the cycle of fluctuations in the oxidation waste gas flow rate Qa and the times when the fuel supply valve 30 is opened and closed in the reforming system 1000A of this embodiment. The reforming system 1000A of this embodiment performs the following step S60A to step S140A, which are the differences from the reforming process (step S60 to step S140) which the reforming system 1000 of the first embodiment performs, once in every two cycles of fluctuations in the oxidation waste gas flow rate Qa. In step S140A, which is describe later, a peak flow rate time Tmax1’ of the oxidation waste gas is recorded in the time recording section 450 once in every two cycles of fluctuations in the oxidation waste gas flow rate Qa. The peak flow rate time Tmax1’ represents the time when the oxidation waste gas flow rate Qa last reached a peak value in the case where the process in step S60A, which is described later, is performed. The process in step S60A, which is described later, is performed after a peak flow rate time Tmax1’ is recorded in the time recording section 450 and before the next cycle of fluctuations in the oxidation waste gas flow rate Qa is completed.

The peak flow rate detecting section 420 predicts a peak flow rate time Tmax1 of the oxidation waste gas in the cycle after the next (see two-cycle period x1 in FIG. 6) based on the previous peak flow rate time Tmax1' (see two-cycle period x1 in FIG. 6) recorded in the time recording section 450 and the rotational speed RE of the cathode pump 60 (step S60A). When a peak flow rate time Tmax1' is not recorded in the time recording section 450 (at the start of the reforming process or after step S30A, which is described later), a peak flow rate of the cathode pump 60 is detected based on the rotational speed RE and the time of the detected peak flow rate is used as the peak flow rate time Tmax1' to predict the peak flow rate time Tmax1 in the cycle after the next.

Then, the valve control section 430 determines a per-unit-time reforming fuel supply quantity Q based on the charge state of the secondary battery 300, and determines the reforming fuel supply quantity Qf1 for two cycles of fluctuations in the oxidation waste gas flow rate Qa based on the per-unit-time reforming fuel supply quantity Q and the cycle of fluctuations in the oxidation waste gas flow rate Qa (step S70A).

Next, the valve control section 430 determines a valve open period Tf1 of the fuel supply valve 30 and a target pressure value Pf1 of the variable regulator 23 based on the reforming fuel supply quantity Qf1 (step S80A). In this case, since the reforming fuel supply quantity Qf1 corresponds to two cycles of fluctuations in the oxidation waste gas flow rate Qa, the valve open period Tf1 is set longer than the valve open period Tf in the reforming process of the first embodiment on the assumption that the per-unit-time reforming fuel supply quantity and the target pressure value of the variable regulator 23 are the same as those in the first embodiment.

Then, the valve control section 430 determines a scheduled valve opening time Ti1 (see two-cycle period x1 in FIG. 6) according to the equation (2) below (step S90A). In this case, the peak flow rate time Tmax1 is set as a scheduled valve closing time.

$$Ti1 = Tmax1 - Tf1 \qquad (2),$$

where, Tmax1: peak flow rate time in cycle after the next, Tf1: valve open period

The valve control section 430 next determines whether the scheduled valve opening time Ti1 has come (step S100A). The valve control section 430 waits when the scheduled valve opening time Ti1 has not come yet (step S100A: NO).

When the valve control section 430 determines that the scheduled valve opening time Ti1 has come (step S100A: YES), the valve control section 430 sets the target pressure value of the variable regulator 23 to the determined target pressure value Pf1 (step S105A), and opens the fuel supply valve 30 (step S110A).

After that, the valve control section 430 waits until the peak flow rate time Tmax1 (scheduled valve closing time) comes (step S120A: NO), and closes the fuel supply valve 30 (step S130A) when the scheduled valve closing time comes (step S120A: YES).

Then, the peak flow rate detecting section 420 records the predicted peak flow rate time Tmax1 in the time recording section 450 as a peak flow rate time Tmax1' (step S140A). In this case, the control circuit 400 may detect an actual peak flow rate time of the oxidation waste gas based on a change in the rotational speed RE of the cathode pump 60 and so on in a routine other than this reforming process and record the detected time as a peak flow rate time Tmax1' in the time recording section 450. After that, the control circuit 400 returns to step S10.

When the pump control section 410 determines that the rotational speed RE is greater than the threshold value Rref (step S20: YES), the control circuit 400 determines that the cathode pump 60 is being driven at a high rotational speed. Then, the control circuit 400 deletes a peak flow rate time Tmax1' recorded in the time recording section 450 (step S30A). After that, the control circuit 400 carries out a normal reforming control (step S40).

As described above, in the reforming system 1000A of this embodiment, the fuel supply valve 30 is opened to supply the reforming fuel to the mixing section 40 (see FIG. 6) once in every two cycles of fluctuations in the oxidation waste gas flow rate Qa during the reforming process (FIG. 5). Thus, the reforming fuel supply quantity Qf1 corresponds to two cycles of fluctuations in the oxidation waste gas flow rate Qa. The valve open period Tf1 is therefore set longer than the valve open period Tf in the reforming process of the first embodiment on the assumption that the per-unit-time reforming fuel supply quantity and the target pressure value of the variable regulator 23 are the same as those in the first embodiment. Therefore, in the above case, the fuel supply valve 30 is prevented from being closed during the unstable period Tz. As a result, the supply of reforming fuel to the mixing section 40 is prevented from becoming unstable. Also, since the number of times the fuel supply valve is opened can be smaller than that in the reforming process of the first embodiment as a whole, the load on the control circuit 400 for controlling the fuel supply valve 30 can be reduced.

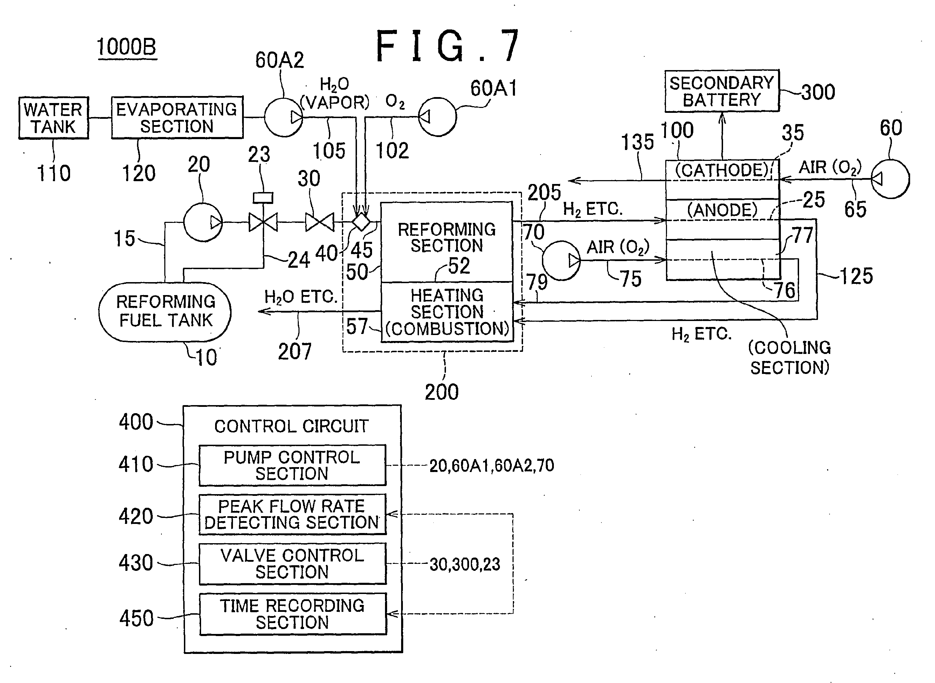

FIG. 7 is a block diagram illustrating the general configuration of a reforming system 1000B according to a first modification. The reforming system 1000B is similar in constitution to the reforming system 1000 of the first embodiment except that the oxidation waste gas discharge flow path 135 is not connected to the mixing section 40 and it additionally has a water tank 110, an evaporating section 120, a water vapor supply pump 60A2, an air supply pump 60A1 and so on. Components of the reforming system 1000B corresponding to those of the reforming system 1000 of the first embodiment are designated by the same reference numerals and their details are not repeated.

In the reforming system 1000B, the water tank 110 and the mixing section 40 are connected to each other via a water supply flow path 105. The evaporating section 120 and the water vapor supply pump 60A2 are disposed in the water supply flow path 105 in this order as viewed from the water tank 110 side.

The water tank 110 stores water. The evaporating section 120 is a device for evaporating water. The water vapor supply pump 60A2 is controlled by the pump control section 410.

When the pump control section 410 activates the water vapor supply pump 60A2, the water in the water tank 110 is sucked into the evaporating section 120 and evaporated therein, and supplied to the mixing section 40 as another reforming raw material.

The air supply pump 60A1 and the mixing section 40 are connected to each other via an air supply flow path 102. The air supply pump 60A1 is controlled by the pump control section 410. When the pump control section 410 activates the air supply pump 60A1, atmospheric air is sucked and oxygen in the air is supplied to the mixing section 40 as another reforming raw material.

As described above, in the reforming system 1000B, oxygen and water vapor as other reforming raw materials are separately supplied to the mixing section 40 of the reformer 200. Then, in the reforming system 1000B, the peak flow rate detecting section 420 predicts a peak flow rate time Tmax2 when the water vapor flow rate reaches a peak in each cycle of fluctuations in the water vapor flow rate caused by pulsation of the water vapor supply pump 60A2, and the valve control section 430 opens the fuel supply valve 30 in synchronization with the peak flow rate time Tmax2 as in the preforming process which the reforming system 1000 of the first embodiment performs.

In the above case, reforming fuel is supplied to the mixing section 40 of the reformer 200 when the water vapor has a peak flow rate in every cycle of fluctuations in the water vapor flow rate. Thus, a shortage of the supply of water vapor relative to the supply of preforming fuel in the mixing section 40 can be prevented. As a result, in the mixing section 40, evaporation of reforming fuel is promoted and a decrease in concentration of reforming fuel gas in the mixed gas can be prevented, or mixing of the reforming fuel gas and the water vapor is promoted and the reforming fuel gas and water vapor are prevented from existing separately in the mixed gas. Therefore, at least a steam-reforming reaction proceeds smoothly at the reforming catalyst of the reforming section 50 and, consequently, the reforming efficiency is improved.

In the reforming system 1000B, the peak flow rate detecting section 420 may predict a peak flow rate time Tmax3 when the air flow rate reaches a peak in each cycle of fluctuations in the air flow rate caused by pulsation of the air supply pump 60A1 so that the valve control section 430 can open the fuel supply valve 30 in synchronization with the peak flow rate time Tmax3. In this case, reforming fuel is supplied to the mixing section 40 of the reformer 200 when the air has a peak flow rate in every cycle of fluctuations in the air flow rate. Thus, a shortage of the supply of air relative to the supply of reforming fuel in the mixing section 40 can be prevented. As a result, in the mixing section 40, evaporation of reforming fuel is promoted and a decrease in concentration of reforming fuel gas in the mixed gas can be prevented, or mixing of the reforming fuel gas and air is promoted and the reforming fuel gas and air are prevented from existing separately in the mixed gas. Therefore, at least a partial oxidation reaction proceeds smoothly at the reforming catalyst of the reforming section 50 and, consequently, the reforming efficiency is improved.

Although the hydrogen generated in the reforming section 50 is supplied to the fuel cell 100 in the reforming systems of the above first and second embodiments and the above first modification, the present invention is not limited thereto. The hydrogen generated in the reforming section 50 may be supplied to another device. An example of such a system is described below.

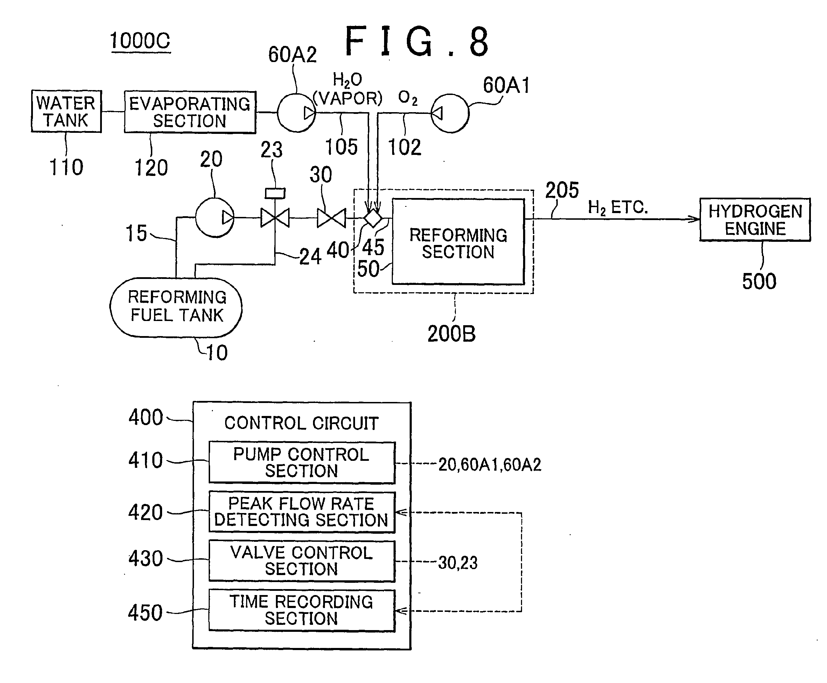

FIG. 8 is a block diagram illustrating the general configuration of a reforming system 1000C according to a second modification. The reforming system 1000C, which is similar in constitution to the reforming system 1000B of the first modification, does not have the fuel cell 100, the secondary battery 300, the cathode pump 60, the cooling pump 70, the heating section 57, and flow paths connected thereto and additionally has a hydrogen engine 500. Components of the reforming system 1000C corresponding to those of the reforming system 1000B of the first modification are designated by the same reference numerals and their details are not repeated.

The reforming system 1000C supplies the hydrogen generated in the reforming section 50 of the reformer 200 to the hydrogen engine 500.

In the reforming system 1000C, oxygen and water vapor as other reforming raw materials are separately supplied to the mixing section 40 of the reformer 200 as in the case with the reforming system 1000B of first modification. Then, in the reforming system 1000C, the peak flow rate detecting section 420 predicts a peak flow rate time Tmax4 when the water vapor flow rate reaches a peak in each cycle of fluctuations in the water vapor flow rate caused by pulsation of the water vapor supply pump 60A2, and the valve control section 430 opens the fuel supply valve 30 in synchronization with the peak flow rate time Tmax4 as in the reforming process which the reforming system 1000B of the first modification performs. Therefore, the same effect as that of the above first modification can be achieved.

Although the fuel supply valve 30 is opened to supply reforming fuel a prescribed time period (Tf) prior to the time when the oxidation waste gas (other reforming raw materials) has a peak flow rate during the reforming process in the reforming systems of the above embodiments, the present invention is not limited thereto. For example, as a third modification, the fuel supply valve 30 may be opened to supply reforming fuel based on the time when the flow rate of the oxidation waste gas has an intermediate value or a value close to a peak flow rate in the above reforming systems.

Although the fuel supply valve 30 is opened to supply reforming fuel to the mixing section 40 once in every two cycle of fluctuations in the oxidation waste gas flow rate Qa (see FIG. 6) during the reforming process (FIG. 5) in the reforming system 1000A of the second embodiment, the present invention is not limited thereto. For example, as a fourth modification, the fuel supply valve may be opened to supply reforming fuel to the mixing section 40 once in every L (a natural number equal to or greater than 3) cycles of fluctuations in the oxidation waste gas flow rate Qa in the reforming system. In this case, the fuel supply valve 30 is prevented from being closed during the unstable period Tz. As a result, the supply of reforming fuel to the mixing section 40 is prevented from becoming unstable. Also, since the number of times the fuel supply valve is opened is much smaller than that in the reforming process of the first embodiment as a whole, the load on the control circuit 400 for controlling the fuel supply valve 30 can be reduced.

Although the mixing section 40 and the reforming section 50 are connected to each other via the mixed gas flow path 45 in the reformer 200 of the reforming system of the above embodiments, the present invention is not limited thereto. For example, as a reforming system of a fifth modification, the mixing section 40 and the reforming section 50 may be located adjoining each other and directly connected to each other. Alternatively, the mixing section 40 may be located in the reforming section 50. In this case, the mixed gas generated in the mixing section 40 can be quickly supplied to the reforming section 50.

Although the scheduled valve opening time Ti of the fuel supply valve 30 is determined based only on the peak flow rate time Tmax and the valve open period Tf of the fuel supply valve 30 during the reforming process (FIG. 3) in the reforming system 1000 of the first embodiment, the present invention is not limited thereto. For example, as a sixth modification, the reforming system 1000 may correct the scheduled valve opening time Ti of the fuel supply valve 30 based on at least one of the evaporation delay Tr1, which is the time necessary to evaporate the reforming fuel sufficiently in the mixing section 40 of the reformer 200, the mixing delay Tr2, which is the time necessary to mix the reforming fuel and oxidation waste gas sufficiently in the mixing section 40, the response delay Tr3 of the fuel supply valve 30, and the transportation delay Tr4 of the oxidation waste gas. In this case, the scheduled valve opening time after the correction is referred to as "corrected scheduled valve opening time Tih." The scheduled valve closing time may be set to the time when the valve open period Tf has elapsed from the corrected scheduled valve opening time Tih, for example. The evaporation delay Tr1, the mixing delay Tr2, the response delay Tr3, and the transportation delay Tr4 may be determined based on the concrete design of the reforming system.

For example, when the scheduled valve opening time Ti is corrected based on the evaporation delay Tr1, the mixing delay Tr2, the response delay Tr3, and the oxidation waste gas transportation delay Tr4 to determine a corrected scheduled valve opening time Tih, the reforming system 1000 may first determine the scheduled valve opening time Ti of the fuel supply valve 30 and determine the time obtained by subtracting the evaporation delay Tr1, the mixing delay Tr2, and the response delay Tr3 from and adding the transportation delay Tr4 to the scheduled valve opening time Ti as the corrected scheduled valve opening time Tih. In this case, the reforming fuel gas and oxidation waste gas (other reforming raw materials) are mixed together in desired proportions in the mixing section 40, and the reforming efficiency is improved.

In the reforming system 1000A of the second embodiment, the scheduled valve opening time Ti1 may be corrected based on at least one of the evaporation delay Tr1 the mixing delay Tr2, the response delay Tr3, and the oxidation waste gas transportation delay Tr4 to determine a corrected scheduled valve opening time as in the above-described sixth modification.

Although the fuel supply valve 30 is opened for the valve open period Tf in each cycle of fluctuations in the oxidation waste gas flow rate Qa when the rotational speed RE of the cathode pump 60 is equal to or lower than the threshold value Rref in step S20 during the reforming process (FIG. 3) in the reforming system 1000 of the first embodiment, the present invention is not limited thereto. When the load required by the secondary battery 300 is greater than a prescribed value or when the charge state of the secondary battery 300 is lower than a prescribed value, the driving rotational speed required to the cathode pump 60 is higher and the cathode pump 60 is driven at a high rotational speed. In this case, the influence of pulsation of the cathode pump 60 on the oxidation waste gas flow rate Qa is smaller when the cathode pump 60 is rotting at a high rotational speed than when rotating at a low rotational speed. Therefore, as a seventh modification, the reforming system 1000 may perform normal reforming control when the load required by the secondary battery 300 is greater than a prescribed value or when the charge state of the secondary battery 300 is lower than a prescribed value, and open the fuel supply valve 30 for the valve open period Tf in each cycle of fluctuations in the oxidation waste gas flow rate Qa only when the load required by the secondary battery 300 is equal to or smaller than a prescribed value or when the charge state of the secondary battery 300 is equal to or higher than a prescribed value. In this case, when the cathode pump 60 is considered as being driven at a high rotational speed, that is, when the influence of pulsation of the cathode pump 60 is considered relatively small, there is no need to control the fuel supply valve 30 and the load on the control circuit 400 can be reduced.

In the reforming systems of the above embodiments, each of the sections in the control circuit 400 implemented as software may be implemented as hardware and vice versa.

While some embodiments of the invention have been illustrated above, it is to be understood that the invention is not limited to details of the illustrated embodiments, but may embodied with various changes, modifications or improvements, which may occur to those skilled in the art, without departing from the scope of the invention, as defined by the claims.

## Claims

**1.** A reforming method comprising:

supplying a reforming fuel to a mixing section (40);
supplying a reforming raw material other than the reforming fuel from a pump (60) to the mixing section (40);
detecting periodic fluctuation in the supply quantity (Qa) of the reforming raw material caused by pulsation of the pump (60); and
opening and closing a fuel supply shut off valve (30) that shuts off the supply of the reforming fuel to the mixing section (40) in synchronization with the detected periodic fluctuation,
**characterized by**
obtaining a rotational speed (RE) of the pump (60); and
opening and closing the fuel supply shut off valve (30) in synchronization with the detected periodic fluctuation only when the obtained rotational speed (RE) is equal to or lower than a prescribed value (Rref).

**2.** A reforming system (1000) comprising:

a fuel storage section (10) that stores a reforming fuel;
a mixing section (40) that mixes the reforming fuel and a reforming raw material other than the reforming fuel to produce a mixed gas;
a reforming section (50) that generates hydrogen from the mixed gas;
a reforming fuel supply flow path (15) through which the reforming fuel stored in the fuel storage section (10) is supplied to the mixing section (40);
a reforming raw material flow path (65, 35, 135) through which the reforming raw material is supplied to the mixing section (40);
a pump (60) disposed in the reforming raw material flow path (65, 35, 135) for supplying the reforming raw material to the mixing section (40), wherein pulsation of the pump (60) causes periodic fluctuation in the supply quantity (Qa) of the reforming raw material supplied from the pump (60) to the mixing section (40);
a shut off valve (30) disposed in the reforming fuel supply flow path (15) for shutting off the supply of the reforming fuel to the mixing section (40); and
a controller (400) including a fluctuation detecting section (420) for detecting the periodic fluctuation and a valve control section (430) for opening and closing the shut off valve (30) in synchronization with the periodic fluctuation detected by the fluctuation detecting section (420),
**characterized in that**
the controller (400) includes a pump control section (410) for obtaining a rotational speed (RE) of the pump (60); and
the valve control section (430) opens and closes the shut off valve (30) in synchronization with the fluctuation only when the obtained rotational speed (RE) is equal to or lower than a prescribed value (Rref).

**3.** The reforming system (1000) according to claim 2, wherein
the valve control section (430) opens the shut off valve (30) a prescribed time period prior to the time (Tmax) when the supply quantity (Qa) of the reforming raw material reaches a peak value.

**4.** The reforming system (1000) according to claim 2 or3, wherein
the valve control section (430) determines a valve open period (Tf) of the shut off valve (30) based on the quantity (Q) of reforming fuel to be supplied to the mixing section (40) per unit time, opens the shut off valve (30) such that an opening cycle of the shut off valve (30) is equal to an integral multiple of the cycle of the periodic fluctuation in the supply quantity (Qa) of the reforming raw material, and closes the shut off valve (30) when the determined valve open period (Tf) elapses.

**5.** The reforming system (1000) according to any one of claims 2 to4, further comprising a fuel cell (100), wherein
the pump (60) supplies an oxidation gas containing oxygen to the fuel cell (100); and
the reforming raw material flow path (65, 35, 135) directs oxidation waste gas, which is generated as a result of an electrochemical reaction of the oxidation gas in the fuel cell (100) and contains oxygen and water vapor, to the mixing section (40) as the reforming raw material.

**6.** The reforming system (1000) according to any one of claims 2 to4, comprising
a fuel cell (100); and

a fuel gas supply flow path (205) through which the hydrogen generated in the reforming section (50) is supplied to the fuel cell (100).

**7.** A reforming system (1000) comprising:

a fuel cell (100);
a fuel storage section (10) that stores a reforming fuel;
a mixing section (40) that mixes the reforming fuel and a reforming raw material other than the reforming fuel to produce a mixed gas;
a reforming section (50) that generates hydrogen from the mixed gas;
a fuel gas supply flow path (205) through which the hydrogen generated in the reforming section (50) is supplied to the fuel cell (100);
a reforming fuel supply flow path (15) through which the reforming fuel stored in the fuel storage section (10) is supplied to the mixing section (40);
a pump (60) that supplies oxidation gas containing oxygen;
an oxidation gas flow path (65) that directs the oxidation gas supplied from the pump (60) to the fuel cell (100);
an oxidation waste gas supply flow path (135) that directs oxidation waste gas, which is generated as a result of an electrochemical reaction of the oxidation gas in the fuel cell (100) and contains oxygen and water vapor, to the mixing section (40) as the reforming raw material; and
a controller (400) including a fluctuation detection section (420) for detecting periodic fluctuation in a supply quantity (Qa) of the oxygen waste gas to be supplied to the mixing section (40), wherein the periodic fluctuation is caused by pulsation of the pump (60), and a control section (430) for controlling the supply of the reforming fuel to the mixing section (40),
**characterized in that**
the reforming fuel supply flow path (15) is provided with a shut off valve (30) that shuts off the supply of the reforming fuel to the mixing section (40); and
the control section (430) is a valve control section that opens and closes the shut off valve (30) in synchronization with the periodic fluctuation in the supply quantity (Qa) of the oxygen waste gas detected by the fluctuation detection section (420) only when a load required to the fuel cell (100) is equal to or smaller than a prescribed value.

**8.** The reforming system (1000) according to any one of claims 5 to 7, further comprising:

a heating section (57) that heats the reforming section (50);
a fuel waste gas supply flow path (125) through which fuel waste gas generated in the fuel cell (100) as a result of an electrochemical reaction of the fuel gas supplied from the reforming section (50) and discharged from the fuel cell (100) is supplied to the heating section (57); and
an oxygen supplying section (70, 75, 76, 79) that supplies oxygen to the heating section (57),
wherein the heating section (57) burns the fuel waste gas and the oxygen supplied by the oxygen supplying section (70, 75, 76, 79) and uses the combustion heat to heat the reforming section (50).

**Patentansprüche**

**1.** Reformierverfahren, das Folgendes umfasst:

Zuführen eines Reformierbrennstoffs zu einem Mischabschnitt (40);
Zuführen eines anderen Reformierausgangsmaterials als dem Reformierbrennstoff von einer Pumpe (60) aus zum Mischabschnitt (40);
Erfassen einer periodischen Schwankung der Zufuhrmenge (Qa) des Reformierausgangsmaterials, die durch Pulsieren der Pumpe (60) hervorgerufen wird; und
Öffnen und Schließen eines Brennstoffzufuhr-Absperrventils (30), das die Zufuhr des Reformierbrennstoffs zum Mischabschnitt (40) absperrt, in Synchronisation mit der erfassten periodischen Schwankung,
**gekennzeichnet durch**
Ermitteln einer Drehgeschwindigkeit (RE) der Pumpe (60); und
Öffnen und Schließen des Brennstoffzufuhr-Absperrventils (30) in Synchronisation mit der erfassten periodischen Schwankung nur dann, wenn die ermittelte Drehgeschwindigkeit (RE) gleich hoch wie oder kleiner als ein vorgeschriebener Wert (Rref) ist.

**2.** Reformiersystem (1000) mit:

einem Brennstoffspeicherabschnitt (10), der einen Reformierbrennstoff speichert;
einem Mischabschnitt (40), der den Reformierbrennstoff und ein anderes Reformierausgangsmaterial als den Reformierbrennstoff mischt, um ein Mischgas herzustellen;
einem Reformierabschnitt (50), der aus dem Mischgas Wasserstoff erzeugt;
einem Reformierbrennstoffzufuhr-Durchflussweg (15), durch den der im Brennstoffspeicherabschnitt (10) gespeicherte Reformierbrennstoff dem Mischabschnitt (40) zugeführt wird;

einem Reformierausgangsmaterial-Durchflussweg (65, 35, 135), durch den das Reformierausgangsmaterial dem Mischabschnitt (40) zugeführt wird;
einer Pumpe (60), die in dem Reformierausgangsmaterial-Durchflussweg (65, 35, 135) angeordnet ist, um dem Mischabschnitt (40) das Reformierausgangsmaterial zuzuführen, wobei ein Pulsieren der Pumpe (60) eine periodische Schwankung der Zufuhrmenge (Qa) des von der Pumpe (60) zum Mischabschnitt (40) zugeführten Reformierausgangsmaterials hervorruft;
einem Absperrventil (30), das in dem Reformierbrennstoffzufuhr-Durchflussweg (15) angeordnet ist, um die Zufuhr des Reformierbrennstoffs zum Mischabschnitt (40) abzusperren; und
einer Steuerung (400), die einen Schwankungserfassungsabschnitt (420) zum Erfassen der periodischen Schwankung und einen Ventilsteuerungsabschnitt (430) zum Öffnen und Schließen des Absperrventils (30) in Synchronisation mit der vom Schwankungserfassungsabschnitt (420) erfassten periodischen Schwankung aufweist,
**dadurch gekennzeichnet, dass**
die Steuerung (400) einen Pumpensteuerungsabschnitt (410) zum Ermitteln einer Drehgeschwindigkeit (RE) der Pumpe (60) aufweist; und
der Ventilsteuerungsabschnitt (430) das Absperrventil (30) nur dann in Synchronisation mit der Schwankung öffnet und schließt, wenn die ermittelte Drehgeschwindigkeit (RE) gleich hoch wie oder kleiner als ein vorgeschriebener Wert (Rref) ist.

3. Reformiersystem (1000) nach Anspruch 2, wobei der Ventilsteuerungsabschnitt (430) das Absperrventil (30) vor der Zeit (Tmax), wenn die Zufuhrmenge (Qa) des Reformierausgangsmaterials einen Spitzenwert erreicht, eine vorgeschriebene Zeitdauer öffnet.

4. Reformiersystem (1000) nach Anspruch 2 oder 3, wobei
der Ventilsteuerungsabschnitt (430) beruhend auf der Menge (Q) an Reformierbrennstoff, die dem Mischabschnitt (40) pro Zeiteinheit zuzuführen ist, eine Ventilöffnungsdauer (Tf) des Absperrventils (30) festlegt, das Absperrventil (30) derart öffnet, dass ein Öffnungszyklus des Absperrventils (30) gleich einem ganzzahligen Vielfachen des Zyklus der periodischen Schwankung der Zufuhrmenge (Qa) des Reformierausgangsmaterials ist, und das Absperrventil (30) schließt, wenn die festgelegte Ventilöffnungsdauer (Tf) verstreicht.

5. Reformiersystem (1000) nach einem der Ansprüche 2 bis 4, mit außerdem einer Brennstoffzelle (100), wobei
die Pumpe (60) der Brennstoffzelle (100) ein Sauerstoff enthaltendes Oxidationsgas zuführt; und
der Reformierausgangsmaterial-Durchflussweg (65, 35, 135) dem Mischabschnitt (40) als das Reformierausgangsmaterial Oxidationsabgas zuleitet, das als Folge einer elektrochemischen Reaktion des Oxidationsgases in der Brennstoffzelle (100) erzeugt wird und Sauerstoff und Wasserdampf enthält.

6. Reformiersystem (1000) nach einem der Ansprüche 2 bis 4, mit
einer Brennstoffzelle (100); und
einem Brennstoffgaszufuhr-Durchflussweg (205), durch den der im Reformierabschnitt (50) erzeugte Wasserstoff der Brennstoffzelle (100) zugeführt wird.

7. Reformiersystem (1000) mit:

einer Brennstoffzelle (100);
einem Brennstoffspeicherabschnitt (10), der einen Reformierbrennstoff speichert;
einem Mischabschnitt (40), der den Reformierbrennstoff und ein anderes Reformierausgangsmaterial als den Reformierbrennstoff mischt, um ein Mischgas herzustellen;
einem Reformierabschnitt (50), der aus dem Mischgas Wasserstoff erzeugt;
einem Brennstoffgaszufuhr-Durchflussweg (205), durch den der im Reformierabschnitt (50) erzeugte Wasserstoff der Brennstoffzelle (100) zugeführt wird;
einem Reformierbrennstoffzufuhr-Durchflussweg (15), durch den der im Brennstoffspeicherabschnitt (10) gespeicherte Reformierbrennstoff dem Mischabschnitt (40) zugeführt wird;
einer Pumpe (60), die Sauerstoff enthaltendes Oxidationsgas zuführt;
einem Oxidationsgas-Durchflussweg (65), der das von der Pumpe (60) zugeführte Oxidationsgas der Brennstoffzelle (100) zuleitet;
einem Oxidationsabgaszufuhr-Durchflussweg (135), der dem Mischabschnitt (40) als das Reformierausgangsmaterial Oxidationsabgas zuleitet, das als Folge einer elektrochemischen Reaktion des Oxidationsgases in der Brennstoffzelle (100) erzeugt wird und Sauerstoff und Wasserdampf enthält; und
einer Steuerung (400), die einen Schwankungserfassungsabschnitt (420) zum Erfassen einer periodischen Schwankung einer Zufuhrmenge (Qa) des dem Mischabschnitt (40) zuzuführenden Sauerstoffabgases, wobei durch Pulsieren der Pumpe (60) die periodische Schwankung hervorgerufen wird, und einen Steuerungsabschnitt (430) zum Steuern der Zufuhr des Reformierbrennstoffs zum Mischabschnitt (40) aufweist,

**dadurch gekennzeichnet, dass**

der Reformierbrennstoffzufuhr-Durchflussweg (15) mit einem Absperrventil (30) versehen ist, das die Zufuhr des Reformierbrennstoffs zum Mischabschnitt (40) absperrt; und

der Steuerungsabschnitt (430) ein Ventilsteuerungsabschnitt ist, der das Absperrventil (30) nur dann in Synchronisation mit der vom Schwankungserfassungsabschnitt (420) erfassten periodischen Schwankung der Zufuhrmenge (Qa) des Sauerstoffabgases öffnet und schließt, wenn eine von der Brennstoffzelle (100) geforderte Last gleich hoch wie oder kleiner als ein vorgeschriebener Wert ist.

**8.** Reformiersystem (1000) nach einem der Ansprüche 5 bis 7, mit außerdem:

einem Heizabschnitt (57), der den Reformierabschnitt (50) heizt;

einem Brennstoffabgaszufuhr-Durchflussweg (125), durch den dem Heizabschnitt (57) Brennstoffabgas zugeführt wird, das in der Brennstoffzelle (100) als Folge einer elektrochemischen Reaktion des vom Reformierabschnitt (50) zugeführten Brennstoffgases erzeugt und aus der Brennstoffzelle (100) abgeführt wird; und

einem Sauerstoffzuführabschnitt (70, 75, 76, 79), der dem Heizabschnitt (57) Sauerstoff zuführt,

wobei der Heizabschnitt (57) das Brennstoffabgas und den vom Sauerstoffzuführabschnitt (70, 75, 76, 79) zugeführten Sauerstoff verbrennt und die Verbrennungswärme nutzt, um den Reformierabschnitt (50) zu heizen.

## Revendications

**1.** Procédé de reformage comprenant le fait :

de fournir un combustible de reformage à une section de mélange (40) ;

de fournir une matière première de reformage autre que le combustible de reformage à partir d'une pompe (60) à la section de mélange (40) ;

de détecter une fluctuation périodique dans la quantité d'alimentation (Qa) de la matière première de reformage provoquée par la pulsation de la pompe (60) ; et

d'ouvrir et de fermer une soupape d'arrêt d'alimentation en combustible (30) qui coupe l'alimentation du combustible de reformage à la section de mélange (40) en synchronisation avec la fluctuation périodique détectée,

**caractérisé par** le fait

d'obtenir une vitesse de rotation (RE) de la pompe (60) ; et

d'ouvrir et de fermer la soupape d'arrêt d'alimentation en combustible (30) en synchronisation avec la fluctuation périodique détectée uniquement lorsque la vitesse de rotation obtenue (RE) est inférieure ou égale à une valeur prescrite (Rref).

**2.** Système de reformage (1000) comprenant :

une section (10) de stockage de combustible qui stocke un combustible de reformage ;

une section de mélange (40) qui mélange le combustible de reformage et une matière première de reformage autre que le combustible de reformage afin de produire un gaz mixte ;

une section de reformage (50) qui génère de l'hydrogène à partir du gaz mixte ;

un passage (15) d'écoulement d'alimentation en combustible de reformage à travers lequel le combustible de reformage stocké dans la section (10) de stockage de combustible est fourni à la section de mélange (40) ;

un passage (65, 35, 135) d'écoulement de matière première de reformage à travers lequel la matière première de reformage est fournie à la section de mélange (40) ;

une pompe (60) disposée dans le passage (65, 35, 135) d'écoulement de matière première de reformage permettant de fournir la matière première de reformage à la section de mélange (40), où la pulsation de la pompe (60) provoque la fluctuation périodique de la quantité d'alimentation (Qa) de la matière première de reformage fournie de la pompe (60) à la section de mélange (40) ;

une soupape d'arrêt (30) disposée dans le passage (15) d'écoulement d'alimentation en combustible de reformage permettant de couper l'alimentation du combustible de reformage à la section de mélange (40) ; et

une unité de commande (400) comportant une section (420) de détection de fluctuation permettant de détecter la fluctuation périodique et une section (430) de commande de soupape destinée à ouvrir et à fermer la soupape d'arrêt (30) en synchronisation avec la fluctuation périodique détectée par la section (420) de détection de fluctuation,

**caractérisé en ce que**

l'unité de commande (400) comporte une section (410) de commande de pompe permettant d'obtenir une vitesse de rotation (RE) de la pompe (60) ; et

la section (430) de commande de soupape ouvre et ferme la soupape d'arrêt (30) en synchronisation avec la fluctuation uniquement lorsque la vitesse de rotation obtenue (RE) est inférieure ou égale à une valeur prescrite (Rref).

**3.** Système de reformage (1000) selon la revendication 2, dans lequel
la section (430) de commande de soupape ouvre la soupape d'arrêt (30) pendant une durée prescrite avant le moment (Tmax) auquel la quantité d'alimentation (Qa) de la matière première de reformage atteint une valeur de crête.

**4.** Système de reformage (1000) selon la revendication 2 ou 3, dans lequel
la section (430) de commande de soupape détermine une période d'ouverture de soupape (Tf) de la soupape d'arrêt (30) sur la base de la quantité (Q) de combustible de reformage devant être fourni à la section de mélange (40) par unité de temps, ouvre la soupape d'arrêt (30) de sorte qu'un cycle d'ouverture de la soupape d'arrêt (30) soit égal à un multiple entier du cycle de la fluctuation périodique dans la quantité d'alimentation (Qa) de la matière première de reformage, et ferme la soupape d'arrêt (30) lorsque la période d'ouverture de soupape (Tf) déterminée s'est écoulée.

**5.** Système de reformage (1000) selon l'une quelconque des revendications 2 à 4, comprenant en outre une pile à combustible (100), où
la pompe (60) fournit un gaz d'oxydation contenant de l'oxygène à la pile à combustible (100) ; et
le passage (65, 35, 135) d'écoulement de matière première de reformage dirige le gaz résiduaire d'oxydation, qui est généré suite à une réaction électrochimique du gaz d'oxydation dans la pile à combustible (100) et qui contient de l'oxygène et de la vapeur d'eau, à la section de mélange (40) en tant que matière première de reformage.

**6.** Système de reformage (1000) selon l'une quelconque des revendications 2 à 4, comprenant
une pile à combustible (100) ; et
un passage (205) d'écoulement d'alimentation en gaz combustible à travers lequel l'hydrogène généré dans la section de reformage (50) est fourni à la pile à combustible (100).

**7.** Système de reformage (1000) comprenant :

une pile à combustible (100) ;
une section (10) de stockage de combustible qui stocke un combustible de reformage ;
une section de mélange (40) qui mélange le combustible de reformage et une matière première de reformage autre que le combustible de reformage pour produire un gaz mixte ;
une section de reformage (50) qui génère de l'hydrogène à partir du gaz mixte ;
un passage (205) d'écoulement d'alimentation en gaz combustible à travers lequel l'hydrogène généré dans la section de reformage (50) est fourni à la pile à combustible (100) ;
un passage (15) d'écoulement d'alimentation en combustible de reformage à travers lequel le combustible de reformage stocké dans la section (10) de stockage de combustible est fourni à la section de mélange (40) ;
une pompe (60) qui fournit un gaz d'oxydation contenant de l'oxygène ;
un passage (65) d'écoulement de gaz d'oxydation qui dirige le gaz d'oxydation fourni de la pompe (60) à la pile à combustible (100) ;
un passage (135) d'écoulement d'alimentation en gaz résiduaire d'oxydation qui dirige le gaz résiduaire d'oxydation, qui est généré suite à une réaction électrochimique du gaz d'oxydation dans la pile à combustible (100) et qui contient de l'oxygène et de la vapeur d'eau, à la section de mélange (40) en tant que matière première de reformage ; et
une unité de commande (400) comportant une section de détection de fluctuation (420) permettant de détecter une fluctuation périodique dans une quantité d'alimentation (Qa) du gaz résiduaire d'oxygène devant être fourni à la section de mélange (40), où la fluctuation périodique est provoquée par pulsation de la pompe (60), et une section de commande (430) permettant de commander l'alimentation du combustible de reformage à la section de mélange (40),

**caractérisé en ce que**
le passage (15) d'écoulement d'alimentation en combustible de reformage est muni d'une soupape d'arrêt (30) qui coupe l'alimentation du combustible de reformage à la section de mélange (40) ; et
la section de commande (430) est une section de commande de soupape qui ouvre et ferme la soupape d'arrêt (30) en synchronisation avec la fluctuation périodique de la quantité d'alimentation (Qa) du gaz résiduaire d'oxygène détectée par la section (420) de détection de fluctuation uniquement lorsqu'une charge nécessaire à la pile à combustible (100) est inférieure ou égale à une valeur prescrite.

**8.** Système de reformage (1000) selon l'une quelconque des revendications 5 à 7, comprenant en outre :

une section de chauffage (57) qui chauffe la section de reformage (50) ;
un passage (125) d'écoulement d'alimentation en gaz résiduaire de combustible à travers lequel le gaz résiduaire de combustible généré dans la pile à combustible (100) suite à une réaction électrochimique du gaz combustible fourni à partir de la section de reformage (50) et déchargé à partir de la pile à combustible (100) est fourni à la section de chauffage (57) ; et
une section d'alimentation en oxygène (70, 75, 76, 79) qui fournit de l'oxygène à la section de chauffage (57),
où la section de chauffage (57) brûle le gaz résiduaire de combustible et l'oxygène fourni par la section d'alimentation en oxygène (70, 75, 76, 79) et utilise la chaleur de combustion pour chauffer la section de reformage (50).

FIG. 1
1000
SECONDARY BATTERY
300
100
(CATHODE)
(ANODE)
35
25
77
76
AIR (O2)
65
60
125
(COOLING SECTION)
H2 ETC.
O2·H2O (VAPOR)
H2 ETC.
AIR (O2)
75
205
70
79
REFORMING SECTION
52
HEATING SECTION (COMBUSTION)
200
135
45
50
57
40
30
24
23
20
15
REFORMING FUEL TANK
10
H2O ETC.
207
CONTROL CIRCUIT
PUMP CONTROL SECTION
PEAK FLOW RATE DETECTING SECTION
VALVE CONTROL SECTION
TIME RECORDING SECTION
20,60,70
30,300,23
400
410
420
430
450

FIG. 2
FUEL SUPPLY VALVE OPEN PERIOD Tf
UNSTABLE PERIOD Tz
Te
REFORMING FUEL SUPPLY QUANTITY (INJECTION QUANTITY) Qf

FIG. 3
REFORMING PROCESS
OBTAIN CATHODE PUMP ROTATIONAL SPEED RE
S10
RE> THRESHOLD VALUE Rref FOR DETERMINATION?
S20
YES
NO
DELETE Tmax'
S30
NORMAL REFORMING CONTROL
S40
PREDICT PEAK FLOW RATE TIME Tmax IN NEXT CYCLE BASED ON PREVIOUS OXIDATION WASTE GAS PEAK FLOW RATE TIME Tmax' AND RE
S60
DETERMINE REFORMING FUEL SUPPLY QUANTITY Qf BASED ON SECONDARY BATTERY CHARGE STATE ETC.
S70
DETERMINE FUEL SUPPLY VALVE OPEN PERIOD Tf AND TARGET PRESSURE VALUE Pf OF REGULATOR BASED ON Qf
S80
DETERMINE SCHEDULED VALVE OPENING TIME Ti OF FUEL SUPPLY VALVE
Ti = Tmax − Tf
SCHEDULED VALVE CLOSING TIME: Tmax
S90
S100
HAS Ti COME?
NO
YES
S105
SET TARGET PRESSURE VALUE OF REGULATOR TO TARGET PRESSURE VALUE Pf
OPEN FUEL SUPPLY VALVE
S110
S120
HAS Tmax COME?
NO
YES
S130
CLOSE FUEL SUPPLY VALVE
S140
RECORD PEAK FLOW RATE TIME Tmax AS Tmax'

F I G . 4
CYCLE PERIOD x
Vref
PEAK FLOW RATE
OXIDATION WASTE GAS FLOW RATE Qa
0
Tmax'
Ti
Tmax
TIME
Tf
OPEN
FUEL SUPPLY VALVE
CLOSE

F I G . 5
REFORMING PROCESS
OBTAIN CATHODE PUMP ROTATIONAL SPEED RE
S10
S20
RE> THRESHOLD VALUE Rref FOR DETERMINATION?
YES
NO
DELETE Tmax1'
S30A
NORMAL REFORMING CONTROL
S40
S60A
PREDICT PEAK FLOW RATE TIME Tmax1 IN CYCLE AFTER NEXT BASED ON PREVIOUS OXIDATION WASTE GAS PEAK FLOW RATE TIME Tmax1' AND RE
S70A
DETERMINE REFORMING FUEL SUPPLY QUANTITY Qf1 BASED ON SECONDARY BATTERY CHARGE STATE ETC.
DETERMINE FUEL SUPPLY VALVE OPEN PERIOD Tf1 AND TARGET PRESSURE VALUE Pf1 OF REGULATOR BASED ON Qf1
S80A
DETERMINE SCHEDULED VALVE OPENING TIME Ti1 OF FUEL SUPPLY VALVE
Ti1 = Tmax1 − Tf1
SCHEDULED VALVE CLOSING TIME: Tmax1
S90A
S100A
HAS Ti1 COME?
NO
YES
S105A
SET TARGET PRESSURE VALUE OF REGULATOR TO TARGET PRESSURE VALUE Pf1
OPEN FUEL SUPPLY VALVE
S110A
S120A
HAS Tmax1 COME?
NO
YES
S130A
CLOSE FUEL SUPPLY VALVE
S140A
RECORD PEAK FLOW RATE TIME Tmax1 AS Tmax1'

F I G . 6
TWO-CYCLE PERIOD x1
Vref
PEAK FLOW RATE
OXIDATION WASTE GAS FLOW RATE Qa
0
Tmax1'
Ti1
Tmax1
TIME
Tf1
OPEN
FUEL SUPPLY VALVE
CLOSE
Tf

FIG. 7

1000B
WATER TANK
110
EVAPORATING SECTION
120
60A2
$H_2O$ (VAPOR)
105
$O_2$
102
60A1
SECONDARY BATTERY
300
135
100
35
60
(CATHODE)
AIR ($O_2$)
65
(ANODE)
25
20
23
30
15
24
40
45
50
REFORMING SECTION
52
HEATING SECTION (COMBUSTION)
57
205
$H_2$ ETC.
70
AIR ($O_2$)
75
79
77
76
125
REFORMING FUEL TANK
10
$H_2O$ ETC.
207
$H_2$ ETC.
(COOLING SECTION)
200
400
CONTROL CIRCUIT
410
PUMP CONTROL SECTION
20,60A1,60A2,70
420
PEAK FLOW RATE DETECTING SECTION
430
VALVE CONTROL SECTION
30,300,23
450
TIME RECORDING SECTION

FIG. 8
1000C
WATER TANK
110
EVAPORATING SECTION
120
60A2
$H_2O$ (VAPOR)
105
$O_2$
102
60A1
REFORMING SECTION
200B
205
$H_2$ ETC.
HYDROGEN ENGINE
500
20
23
30
24
40
45
50
15
REFORMING FUEL TANK
10
CONTROL CIRCUIT
PUMP CONTROL SECTION
PEAK FLOW RATE DETECTING SECTION
VALVE CONTROL SECTION
TIME RECORDING SECTION
400
410
420
430
450
20,60A1,60A2
30,23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005235583 A